(19) Europäisches Patentamt
European Patent Office
Office européen des brevets

(11) Veröffentlichungsnummer: **0 103 826**
**B1**

(12) # EUROPÄISCHE PATENTSCHRIFT

(45) Veröffentlichungstag der Patentschrift: **27.08.86**

(51) Int. Cl.⁴: **C 09 B 67/34**, C 09 B 69/06, D 06 F 1/06

(21) Anmeldenummer: **83108916.4**

(22) Anmeldetag: **09.09.83**

(54) **Verfahren zur Herstellung von Farbstofflösungen für die Spinnfärbung von sauer modifizierten Synthesefasern.**

(30) Priorität: **22.09.82 DE 3234994**

(43) Veröffentlichungstag der Anmeldung: **28.03.84 Patentblatt 84/13**

(45) Bekanntmachung des Hinweises auf die Patenterteilung: **27.08.86 Patentblatt 86/35**

(84) Benannte Vertragsstaaten: **CH DE FR GB LI**

(56) Entgegenhaltungen:
**EP-A-0 041 926**
**FR-A-1 355 911**
**FR-A-2 235 177**
**FR-A-2 300 787**
**FR-A-2 348 251**

(73) Patentinhaber: **BAYER AG, Konzernverwaltung RP Patentabteilung, D-5090 Leverkusen 1 Bayerwerk (DE)**

(72) Erfinder: **Bara, Helmut, Waldstrasse 9, D-5653 Leichlingen 2 (DE)**
Erfinder: **Wiesel, Manfred, Dr., Am Steinberg 49, D-5090 Leverkusen 1 (DE)**

**EP 0 103 826 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Lösungen kationischer Farbstoffe für die Spinnfärbung von sauer modifizierten Synthesefasern werden im allgemeinen in der Weise hergestellt, dass die Farbstoffe in einem mit dem Spinnsystem verträglichen Lösemittel aufgelöst werden. Die durch das Herstellungsverfahren eingeschleppten Fremdsalze müssen sorgfältig entfernt werden, da diese das Spinndüsensystem verstopfen und insbesondere Chloride zu Korrosionsproblemen führen können.

Es wurde gefunden, dass man mineralsalzfreie, gebrauchsfertige Spinnfarbstoff-Lösungen erhält, wenn man geeignete kationische Farbstoffe in ihre Basen umwandelt und diese in einem für die Spinnfärbung geeigneten organischen Lösungsmittel mit einer Sulfonsäure, einem Schwefelsäuremonoalkylester oder einem sauren Phosphor- oder Phosphonsäureester umsetzt.

Geeignete organische Lösungsmittel sind Amide niederer Carbonsäuren, insbesondere Dimethylformamid und Dimethylacetamid.

Geeignete Ausgangsstoffe sind die Basen von kationischen Farbstoffen aus der Reihe der Azo-, Methin-, Phthalocyanin- und der Anthrachinonreihe.

Bevorzugte Basen sind beispielsweise:

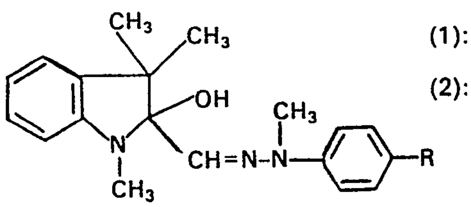

(1): R=H

(2): $R=OCH_3$

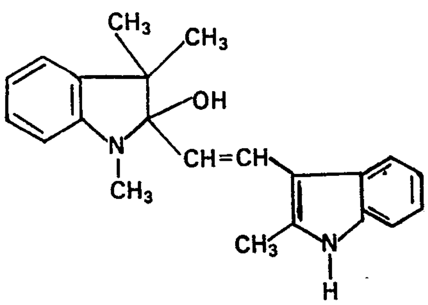

(3)

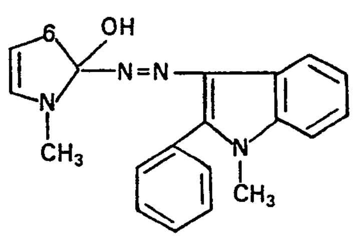

(4)

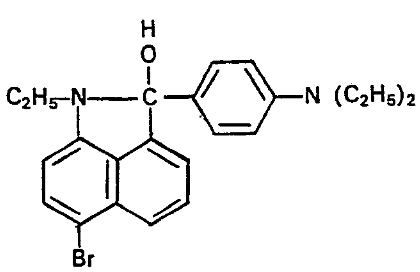

(5)

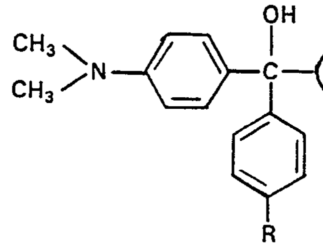

(6): $R=N(C_2H_4\text{-}OH)_2$

(7): R=H

$(PC)\ (SO_2NH\text{-}(CH_2)_3\text{-}N(CH_3)_2)_3$ (8)

Die Basen werden zunächst in dem organischen Lösungsmittel, beispielsweise in Dimethylformamid, gelöst und durch Zugabe der organischen Säure in die entsprechenden Sulfonate, Sulfate oder Phosphate umgewandelt.

Als organische Säuren kommen in Betracht Sulfonsäuren und Phosphonsäuren aus der Benzol- und Naphthalinreihe, insbesondere gegebenenfalls durch Alkyl wie Methyl, Ethyl oder Dodecyl ein- oder mehrfach substituierte Benzol- oder Naphthalinsulfonsäuren, vorzugsweise Benzolsulfonsäure, p-Toluolsulfonsäure, α-Naphthalinsulfonsäure und Dodecylbenzolsulfonsäure. Aber auch aliphatische Säuren sind geeignet wie Alkylsulfonsäuren, beispielsweise Methan- und Ethansulfonsäure sowie Schwefelsäure-monoalkylester, z.B. Schwefelsäuremonomethylester und -monoethylester sowie Phosphorsäurealkylester, z.B. Phosphorsäurediethylester.

Die überraschend glatte Umsetzung der Basen mit der Säure führt man vorzugsweise durch, indem man ein Teil der Base bei 15 bis 90 °C, vorzugsweise bei 25 bis 40 °C, in 2 bis 10 Teilen, vorzugsweise in 4 bis 6 Teilen Dimethylformamid löst. Zum Schluss gibt man 1 bis 5 Äquivalente der Säure zu und lässt 1 bis 5 Stunden nachreagieren.

Man erhält auf diese Weise stabile, mineralsalzfreie Lösungen von Farbstoffen in Konzentrationen von 10 bis 50%, die direkt dem Spinnsystem zudosiert werden können.

Der Wassergehalt dieser Lösungen, der durch die Restfeuchte der Farbstoffbasen und durch das bei der Salzbildung entstehende Wasser bedingt ist, ist gering und liegt maximal bei 3%.

### Beispiel 1

167 g der obengenannten Basen (8) werden bei 30 bis 35 °C in 770 g DMF 30 Minuten lang verrührt. Dabei entsteht eine Lösung, in die man 68 g p-Toluolsulfonsäure einträgt. Nach einstündigem Nachrühren erhält man 1005 g einer klaren blauen Farbstofflösung, welche in dieser Form oder im Gemisch mit anderen Farbstoffen in der gewünschten Konzentration einer Spinnlösung von Polyacrylnitril in DMF zugesetzt wird.
(DMF = Dimethylformamid)

### Beispiel 2

116 g der Base (1) werden bei 30 bis 35 °C in

812 g DMF 60 Minuten lang verrührt. Dabei entsteht eine Lösung, in die man 72 g Benzolsulfonsäure einträgt. Nach einstündigem Nachrühren erhält man 1000 g einer klaren gelben Farbstofflösung, welche in dieser Form oder im Gemisch mit anderen Farbstoffen in gewünschter Konzentration einer Spinnlösung von Polyacrylnitril in DMF zugesetzt wird.

Beispiel 3

128 g der Base (2) werden bei 25 bis 30 °C in 774 g DMF 45 Minuten lang verrührt. Dabei entsteht eine Lösung, in die man 98 g 1-Naphthalinsulfonsäure einträgt. Nach einstündigem Nachrühren erhält man 1000 g einer klaren goldgelben Farbstofflösung, welche in dieser Form oder im Gemisch mit anderen Farbstoffen in gewünschter Konzentration einer Spinnlösung von Polyacrylnitril in DMF zugesetzt wird.

Beispiel 4

100 g der Base (3) werden bei 35 bis 40 °C in 830 g DMF 30 Minuten lang verrührt. Dabei entsteht eine Lösung, in die man 70 g p-Toluolsulfonsäure einträgt. Nach einstündigem Nachrühren erhält man 1000 g einer klaren orangefarbenen Farbstofflösung, welche in dieser Form oder im Gemisch mit anderen Farbstoffen in gewünschter Konzentration einer Spinnlösung von Polyacrylnitril in DMF zugesetzt wird.

Beispiel 5

105 g der Base (4) werden bei 40 bis 50 °C in 859 g DMF 45 Minuten lang verrührt. Dabei entsteht eine Lösung, in die man 36 g Methansulfonsäure einträgt. Nach einstündigem Nachrühren erhält man 1000 g einer klaren Farbstofflösung, welche in dieser Form oder im Gemisch mit anderen Farbstoffen in gewünschter Konzentration einer Spinnlösung von Polyacrylnitril in DMF zugesetzt wird.

Beispiel 6

119 g der Base (5) werden bei 30 bis 35 °C in 823 g Dimethylacetamid 45 Minuten lang verrührt. Dabei entsteht eine Lösung, in die man 58 g Benzolsulfonsäure einträgt. Nach einstündigem Nachrühren erhält man 1000 g einer klaren Farbstofflösung, welche in dieser Form oder im Gemisch mit anderen Farbstoffen in gewünschter Konzentration einer Spinnlösung von Polyacrylnitril in Dimethylacetamid zugesetzt wird.

Beispiel 7

104 g der Base (7) werden bei 35 bis 40 °C in 860 g DMF 60 Minuten lang verrührt. Dabei entsteht eine Lösung, in die man 36 g Methansulfonsäure einträgt. Nach einstündigem Nachrühren erhält man 1000 g einer klaren Farbstofflösung, welche in dieser Form oder im Gemisch mit anderen Farbstoffen in gewünschter Konzentration einer Spinnlösung von Polyacrylnitril in DMF zugesetzt wird.

Auf die beschriebene Weise können auch Lösungen der folgenden Farbstoffe erhalten werden:

Farbton der Lösung:

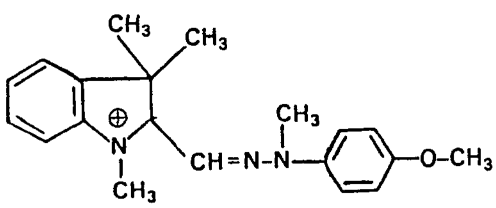

$^{\ominus}O_3SOCH_3$ gelb

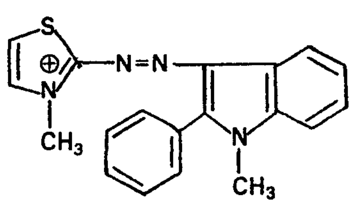

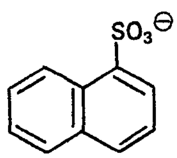

rot

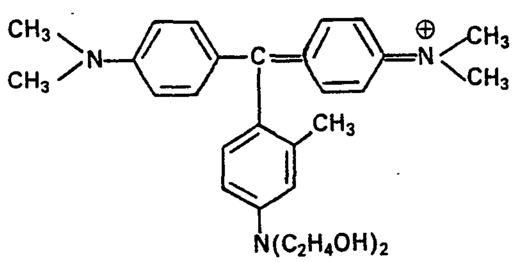

$CH_3SO_3^{\ominus}$ blau

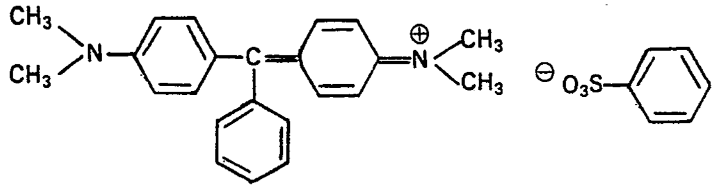

grün

## Patentansprüche

1. Verfahren zur Herstellung stabiler Lösungen von kationischen Farbstoffen, dadurch gekennzeichnet, dass man Basen kationischer Farbstoffe in für die Spinnfärbung geeigneten organischen Lösungsmitteln löst und durch Umsetzung mit einer Sulfonsäure, einem Schwefelsäuremonoalkylester oder einem sauren Phosphor- oder Phosphonsäureester in die entsprechenden Salze überführt.

2. Verfahren nach Anspruch 1, dadurch gekennzeichnet, dass man Basen aus der Reihe der Azo-, Methin-, Phthalocyanin- oder Anthrachinon-Reihe umsetzt.

2. Verfahren nach Anspruch 1, dadurch gekennzeichnet, dass man Basen aus der Reihe der Azo-, Methin-, Phthalocyanin- oder Anthrachinon-Reihe umsetzt.

3. Verfahren nach Anspruch 1, dadurch gekennzeichnet, dass man die Farbstoffbasen mit einer Sulfon- oder Phosphonsäure der Benzol- oder Naphthalinreihe, einem Schwefelsäure-monoalkylester oder einem Phosphorsäure-mono- oder -dialkylester umsetzt.

4. Verfahren nach Anspruch 1, dadurch gekennzeichnet, dass man die Umsetzung in Amiden niederer Carbonsäuren durchführt.

5. Verfahren nach Anspruch 1, dadurch gekennzeichnet, dass man die Umsetzung in Dimethylformamid oder Dimethylacetamid durchführt.

6. Verfahren nach Anspruch 1, dadurch gekennzeichnet, dass man die Konzentration der Basen in den organischen Lösungsmitteln so wählt, dass 10 bis 50%ige Lösungen erhalten werden.

7. Verwendung der nach Anspruch 1 erhaltenen Lösungen zum Spinnfärben von sauer modifizierten Synthesefasern, insbesondere Polyacrylnitril.

## Revendications

1. Procédé pour la fabrication de solutions stables de colorants cationiques, caractérisé en ce que l'on dissout des bases de colorants cationiques dans des solvants organiques appropriés pour la coloration dans la masse et on les transforme par réaction avec un acide sulfonique, un sulfate de monoalkyle ou un ester phosphorique ou phosphonique acide en les sels correspondants.

2. Procédé selon la revendication 1, caractérisé en ce que l'on fait réagir des bases de la série azoïque, de la série méthinique, de la série des phtalocyanines ou de la série anthraquinonique.

3. Procédé selon la revendication 1, caractérisé en ce que l'on fait réagir les bases de colorants avec un acide sulfonique ou phosphonique de la série benzénique ou de la série naphtalénique, un sulfate de monoalkyl ou un phosphate de mono- ou dialkyle.

4. Procédé selon la revendication 1, caractérisé en ce que l'on met en œuvre la réaction dans des amides d'acides carboxyliques inférieurs.

5. Procédé selon la revendication 1, caractérisé en ce que l'on met en œuvre la réaction dans le diméthylformamide ou le diméthylacétamide.

6. Procédé selon la revendication 1, caractérisé en ce que l'on choisit la concentration des bases dans les solvants organiques de telle sorte que l'on obtienne des solutions à 10–50 %.

7. Utilisation des solutions obtenues selon la revendication 1, pour la coloration dans la masse de fibres synthétiques modifiées par un acide, en particulier le polyacrylonitrile.

## Claims

1. Process for the preparation of stable solutions of cationic dyestuffs, characterised in that bases of cationic dyestuffs are dissolved in organic solvents which are suitable for spin dyeing and converted, by reaction with a sulphonic acid, a sulphuric acid monoalkyl ester or an acidic phosphoric acid ester or phosphonic acid ester, into the corresponding salts.

2. Process according to Claim 1, characterised in that bases from the series comprising the azo, methine, phthalocyanine or anthraquinone series are reacted.

3. Process according to Claim 1, characterised in that the dyestuff bases are reacted with a sulphonic or phosphonic acid fo the benzene or naphthalene series a sulphuric acid monoalkyl ester or a phosphoric acid mono- or dialkyl ester.

4. Process according to Claim 1, characterised in that the reaction is carried out in amides of lower carboxylic acids.

5. Process according to Claim 1, characterised in that the reaction is carried out in dimethyl formamide or dimethyl acetamide.

6. Process according to Claim 1, characterised in that the concentration of the bases in the organic solvents is selected such that 10 to 50 % strength solutions are obtained.

7. Use of the solutions obtained according to Claim 1 for spin-dyeing acid-modified synthetic fibres, in particular polyacrylonitrile.